(19) Europäisches Patentamt
European Patent Office
Office européen des brevets

(11) EP 2 745 760 A1

(12) **EUROPEAN PATENT APPLICATION**

(43) Date of publication:
25.06.2014 Bulletin 2014/26

(51) Int Cl.:
A47L 15/48 (2006.01)   D06F 58/20 (2006.01)
A47L 15/42 (2006.01)   D06F 39/04 (2006.01)

(21) Application number: 12198356.3

(22) Date of filing: 20.12.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Electrolux Home Products Corporation
N.V.
1130 Brussel (BE)

(72) Inventors:
• Cavarretta, Francesco
  I-33080 Porcia (PN) (IT)
• Bison, Alberto
  I-33080 Porcia (PN) (IT)

(74) Representative: Maccalli, Marco et al
Maccalli & Pezzoli S.r.l.,
Via Settembrini, 40
20124 Milano (IT)

(54) **Laundry or tableware treating appliance having a heat pump system exploiting a reduced amount of refrigerant**

(57)    Laundry or tableware treating appliance (1), having a heat pump system (5), the heat pump system having a refrigerant circuit, the appliance comprising: an articles treatment chamber (2) for treating articles using a medium; a first heat exchanger (6) for heating a refrigerant; a second heat exchanger (7) for cooling the refrigerant and heating the medium; a refrigerant expansion device (14) arranged in the refrigerant circuit between the second heat exchanger (7) and the first heat exchanger (6), and a compressor (8) arranged in the refrigerant circuit between the first heat exchanger (6) and the second heat exchanger (7). The first and second heat exchanges and the refrigerant expansion device are designed so that, during a relevant part of the articles treating cycle the thermodynamic quality of the refrigerant at the inlet of the refrigerant expansion device is between -0.03 and 0.3, wherein the thermodynamic quality is defined as $(h - h_{satL})/(h_{satV} - h_{satL})$, with: $h$ being the actual refrigerant enthalpy; $h_{SatL}$ being the enthalpy of the refrigerant in saturated liquid condition (it is the enthalpy of the point that is on the saturated liquid curve and at the actual pressure of the refrigerant); $h_{satV}$ being the enthalpy of the refrigerant in saturated vapor condition.

FIG. 2

EP 2 745 760 A1

**Description**

Background of the invention

Field of the invention

The present invention relates to appliances for treating articles, and is in particular directed to appliances for treating laundry or tableware, like laundry washers, laundry washers/dryers, dishwashers.

Overview of the related art

Appliances for drying laundry, like laundry dryers (tumble dryers) and laundry washers/dryers, generally comprise a drying chamber for accommodating therein the laundry to be dried. A heated and dehumidified drying medium, typically air, is guided through the drying chamber. Upon passing through the drying chamber and laundry, the heated and dehumidified drying medium takes up humidity and at the same time cools down. The drying medium then exits the drying chamber, thereby discharging humidity from the drying chamber and the laundry.

In order to improve the energy efficiency of such appliances, it is known to use heat pumps. Heat pump technology is, at present, the most energy efficient way to dry laundry.

Heat pumps generally operate with refrigerants as working fluids. In a conventional heat pump tumble dryer, the drying medium, i.e. drying air (i.e. process air), flows in a closed loop. The drying air, impelled by a fan, passes through the drying chamber (drum) removing water from wet clothes, then it is cooled down and dehumidified in a heat pump evaporator, and heated up in a heat pump condenser (main condenser), to be re-introduced into the drum. The refrigerant instead is compressed by a compressor, condensed in the main condenser, laminated in an expansion device (e.g. expansion valve or capillary tube) and then vaporised in the evaporator. In this way, residual heat from the drying medium exiting the drying chamber can be extracted therefrom and transferred again to the drying medium before it re-enters the drying chamber.

More in detail, the refrigerant, coming from the compressor, is de-superheated (i.e. it is cooled down to the saturation temperature), then it is condensed and sub-cooled (i.e. it is cooled down below saturation temperature) in the main condenser. The refrigerant coming from the expansion device is vaporized and superheated (i.e. it is warmed up to a temperature level higher than the saturation temperature) in the evaporator.

A certain amount of sub-cooling at the main condenser improves the performances of the heat pump tumble dryer, because the expansion device is fed up with refrigerant in liquid state and then it works properly, otherwise the expansion process is not regular. A high level of sub-cooling at the condenser allows the evaporator to be fed up with the refrigerant in more favourable conditions, and thus the evaporator cooling power can increase.

US 2005/0066538 discloses a drying apparatus for drying articles such as clothing. The drying apparatus includes a chamber for containing articles to be dried and a system for supplying heated dry air at a first temperature to the chamber. The air supplying system comprises an air flow pathway having an evaporator for removing moisture from air exiting the chamber and for decreasing the temperature of the air to below dew point temperature. The air supply system further has a condenser for increasing the temperature of the air exiting the evaporator to the first temperature. The drying apparatus further has a heat pump system having a refrigerant loop which includes a compressor, the condenser, a TEV valve, and the evaporator. A refrigerant sub-cooler downstream the condenser (i.e., an additional, auxiliary condenser) is used.

Summary of the invention

The Applicant believes that it would be advantageous to have the possibility of reducing the necessary amount (charge) of refrigerant fluid in the heat pump system, keeping it as low as possible (compatibly with desired performance of the article treating appliance).

A reduction in the charge of refrigerant fluid is beneficial for safety reasons: some types of refrigerants, like for example hydrocarbon-based refrigerants, are flammable, so that a reduction in the refrigerant charge would enable a reduction of the risk of combustion, for example in case of refrigerant leakages from the heat pump system. Also, a reduction in the charge of refrigerant fluid makes appliances including heat pumps more eco-friendly.

The Applicant has found that, in order to enable a reduction or minimization of the charge of refrigerant fluid in the heat pump system, it is beneficial to properly choose the level of sub-cooling of the refrigerant fluid.

The Applicant has found that, in order to make it possible to reduce the necessary charge of refrigerant fluid in the heat pump system, it is advantageous to keep the refrigerant sub-cooling level at the inlet of the refrigerant expansion device in a certain range, close to zero, at least for a portion of the laundry or tableware treating cycle.

An operating cycle of a heat pump tumble dryer can be divided into two main phases: a first, transitory phase, and a second, steady-state phase. During the first phase, the drying air temperature and the refrigerant fluid temperature (that usually are at ambient temperature when the tumble dryer starts operating) are increased up to respective desired operating levels suitable to remove moisture from the laundry being dried. During the second phase, the drying of the laundry substantially takes placed.

The portion of the drying cycle can be a percentage of the whole drying cycle (e.g., 100 %, or 70 %, or 50 %). The drying cycle portion can for example correspond to the steady-state phase of the drying cycle.

The Applicant has found that a sub-cooling of the refrigerant fluid close to zero allows keeping the refrigerant charge limited. The density of the refrigerant fluid at high pressure and in liquid state is very high. The amount of refrigerant fluid that has to be charged in the heat pump system increases with the increase of the level of sub-cooling that takes place in the condenser, because a higher level of sub-cooling means more refrigerant being in liquid phase..

According to the present invention, in order to minimize the refrigerant charge, the heat pump system elements (the heat pump heat exchangers, the refrigerant expansion device, the compressor) are designed and/or operated so that the value of the thermodynamic quality of the refrigerant at the inlet of the refrigerant expansion device is kept between -0.03 ÷ 0.3, advantageously between - 0.02 ÷ 0.1, preferably between -0.01 ÷ 0.1, more preferably between -0.005 ÷ 0.1, and even more preferably between -0.005 ÷ 0.05.

The thermodynamic quality, *TQ,* is a parameter defined as follows:

$$TQ = (h - h_{satL})/(h_{satV} - h_{satL})$$

where:

    *h* is the actual refrigerant enthalpy;
    $h_{satL}$ is the enthalpy of the refrigerant in saturated liquid condition;
    $h_{satV}$ is the enthalpy of the refrigerant in saturated vapor condition.

Since the desired level of sub-cooling of the refrigerant is very low, only the main condenser, for the exchange of heat between the refrigerant and the laundry or tableware treating medium, is provided, without any auxiliary condenser downstream the main condenser.

According to the present invention, there is provided a laundry or tableware treating appliance, having a heat pump system having a refrigerant circuit.

The appliance comprises:

    an articles treatment chamber for treating articles using a medium;
    a first heat exchanger for heating a refrigerant;
    a second heat exchanger for cooling the refrigerant and heating the medium;
    a refrigerant expansion device arranged in the refrigerant circuit between the second heat exchanger and the first heat exchanger, and
    a compressor arranged in the refrigerant circuit between the first heat exchanger and the second heat exchanger.

The first and second heat exchanges and the refrigerant expansion device are designed so that, during a relevant part of the articles treating cycle the thermodynamic quality of the refrigerant at the inlet of the refrigerant expansion device is between -0.03 and 0.3..

Preferably, the thermodynamic quality of the refrigerant at the inlet of the refrigerant expansion device is between -0.02 and 0.1, even more preferably between -0.01 and 0.1, even more preferably between -0.005 and 0.1, even more preferably between -0.005 and 0.05.

The medium may be washing water.

The appliance may be a laundry dryer, in which case the medium is drying air, the articles treating cycle is a drying cycle, and the first exchanger also cools and dehydrates the drying air.

Said relevant part of the drying cycle may be a percentage of the whole drying cycle. Said percentage of the whole drying cycle may be 100 %, or 70 %, or 50%.

Said relevant part of the drying cycle is preferably a steady-state phase of the drying cycle following an initial transitory phase during which the medium temperature and the refrigerant temperature are increased up to respective desired operating levels suitable to remove moisture from the laundry being dried.

No auxiliary refrigerant liquefier is provided in addition to the main liquefier. Thus, the thermodynamic quality at the outlet of the second heat exchanger is substantially equal to the thermodynamic quality at the inlet of the refrigerant expansion device.

Preferably, a piping connecting the outlet of the second heat exchanger to the inlet of the refrigerant expansion device is less than 5 cm in length.

The refrigerant expansion device may comprise a back-pressure expansion valve, controlled by the pressure and/or temperature of the refrigerant fluid exiting from the second heat exchanger.

The appliance may comprise a fan arranged for cooling with ambient air the compressor, and a control unit. The control unit is advantageously operable to control the speed of the fan and/or the compressor based on the detection of the refrigerant temperature and/or pressure in a portion at high-pressure of the refrigerant circuit portion in order to keep the thermodynamic quality within the specified range.

Brief description of the drawings

These and other features and advantages of the present invention will be made clearer by reading the following detailed description of exemplary and non-limitative embodiments thereof, referring to the following drawing figures, wherein:

    **Figure 1** schematically shows a heat pump laundry dryer according to an embodiment of the present invention;
    **Figure 2** is a pressure versus enthalpy diagram of the refrigerant fluid R407C;

**Figure 3** is an isometric view of the heat pump laundry dryer, with one lateral wall of an appliance cabinet removed, and

**Figure 4** shows in exploded view a basement of the laundry dryer of **Figure 3** configured for accommodating the heat pump.

Detailed description of exemplary embodiments of the invention

Exemplary embodiments of the invention will be described in connection with the annexed figures.

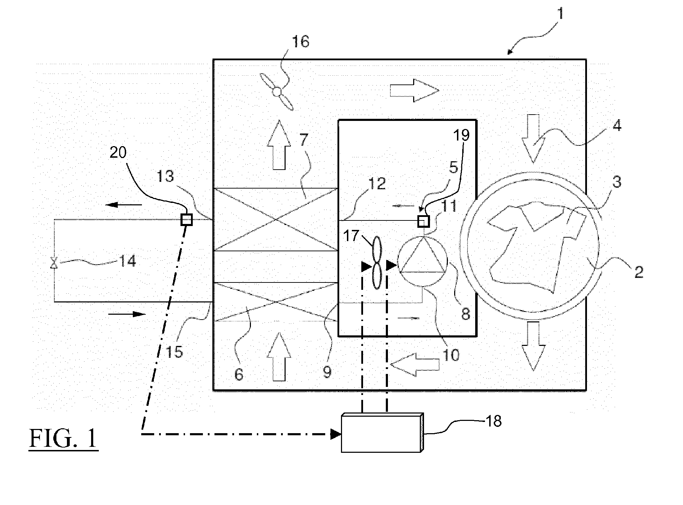

**Figure 1** schematically shows a heat pump laundry dryer **1** according to an embodiment of the present invention. It is pointed out that although in the following description a heat pump laundry dryer is considered, this choice is merely by way of example, because the present invention applies generally to any appliance for treating articles equipped with a heat pump system in heat-exchange relationship with an article treatment medium, that can be a washing medium or a drying medium, in particular appliances for treating laundry or tableware, like laundry washers, laundry washers/dryers, laundry dryers, dishwashers.

The heat pump laundry dryer **1** comprises a drying chamber **2**. The drying chamber may comprise a rotatable drum (drying drum), for tumbling the laundry. In operation, the drying drum **2** accommodates wet laundry **3** to be dried. In other embodiments, the drying chamber does not comprise a rotatable drum (cabinet dryers).

For adequately drying the laundry **3,** a drying medium **4,** such as air (process air), in particular comprising ambient air, is circulated through the drying drum **2** via a drying medium circuit, which preferably forms a closed-loop circuit. However, in other embodiments the drying medium may flow through an open-loop circuit (process air being taken in from, and then re-discharged into the outside environment).

For drying the laundry **3,** the drying medium **4,** heated to a temperature for example of about 100 °C at the most and thereby having a comparatively low relative humidity, is fed into the drying drum **2** and impinges the wet laundry **3.** As a consequence, humidity of the wet laundry **3** is absorbed by the drying medium **4** thereby drying the laundry **3.** As the laundry **3** in the drying drum **2** generally has a temperature below that of the drying medium **4** entering the drying drum **2,** the drying medium **4** also cools down when passing through the drying drum 2, for example to temperatures of about 30 °C.

After having passed through the drying drum **2,** the drying medium **4,** having now a comparatively high relative humidity, exits the drying drum **2** and is further cooled down to condense excess humidity therefrom. After that, the drying medium **4** is recirculated through the drying drum **2**. Before re-entering the drying drum **2,** the drying medium **4** is heated up again, thereby reducing its relative humidity.

For dehumidifying and (re)heating the drying medium **4,** the heat pump tumble dryer **1** comprises a heat pump system or unit **5.** The heat pump unit **5** exemplarily comprises a refrigerant evaporator **6** and a refrigerant liquefier or condenser **7.**

The heat pump unit **5** further comprises a compressor **8** interconnected between the refrigerant evaporator **6** and the refrigerant liquefier **7.** A refrigerant evaporator outlet **9** is connected to a compressor inlet **10** and a compressor outlet **11** is connected to a refrigerant liquefier inlet **12.**

A refrigerant liquefier outlet **13** is connected via an expansion device **14,** for example a throttling element, an expansion valve, a capillary tube, to a refrigerant evaporator inlet **15.**

By the heat pump unit **5,** heat is transferred from the refrigerant evaporator **6** to the refrigerant liquefier **7.**

A refrigerant, circulated in the heat pump unit closed circuit, is heated up at the refrigerant evaporator **6** and cooled down at the refrigerant liquefier **7.**

In other words, the drying air (i.e. process air), flows in an e.g. closed loop. The drying air, impelled by a fan, passes through the drying chamber (drum) removing water from wet clothes, then it is cooled down and dehumidified in a heat pump evaporator, and heated up in a heat pump condenser (main condenser), to be reintroduced into the drum. The refrigerant instead is compressed by the compressor **8,** condensed in the liquefier **7,** expanded in the expansion device **14** and then vaporised in the evaporator **6.** In this way, residual heat from the drying air exiting the drying chamber **2** can be extracted therefrom and transferred again to the drying air before it re-enters the drying chamber **2.**

The refrigerant, coming from the compressor **8,** is de-superheated (i.e. it is cooled down to the saturation temperature), then it is condensed in the liquefier **7.** The refrigerant coming from the expansion device **14** is vaporized and superheated (i.e. it is warmed up to a temperature level higher than the saturation temperature) in the evaporator **6.**

The relatively low temperature at the refrigerant evaporator **6** is used to cool the drying air **4** down so as to condensate humidity, i.e. to dehumidify the drying air **4** exiting the drying drum **2.**

The elevated temperature at the refrigerant liquefier **7** is used to (re)heat the drying air **4** which in turn is then fed to the drying drum **2** for drying the laundry **3.**

The direction of refrigerant flow is indicated in **Figure 1** by small arrows, whilst the flow of the drying air **4** is indicated by larger and broader arrows. The heat pump tumble dryer **1** may comprise a fan **16** adapted to and designed for circulating the drying air **4** within the heat pump tumble dryer circuit.

The Applicant has found that it is beneficial to properly choose the level of sub-cooling of the refrigerant fluid.

A typical operating cycle of a heat pump tumble dryer can be divided into two main phases: a first, transitory phase, and a second, steady-state phase. During the first phase, the drying air temperature and the refrigerant fluid temperature (that usually are at ambient temperature when the tumble dryer starts operating) are increased up to respective desired levels, suitable to remove moisture from the laundry being drier. The drying of the laundry substantially takes place during the second phase.

According to an embodiment of the present invention, the refrigerant sub-cooling level at the inlet of the expansion device **14** is kept in a certain range at least for a portion of the drying cycle, for reducing the necessary charge of refrigerant fluid in the heat pump system.

The portion of the drying cycle can be a percentage of the whole drying cycle (e.g. 100 %, or 70 %, or 50 %). The drying cycle portion can for example correspond to the steady-state phase of the drying cycle.

According to an embodiment of the present invention, the heat pump elements (the heat exchangers, the lamination means, the compressor) are designed and/or operatively controlled so that the refrigerant sub-cooling level at the inlet of the expansion device **14** is close to zero at least during such portion of the drying cycle.

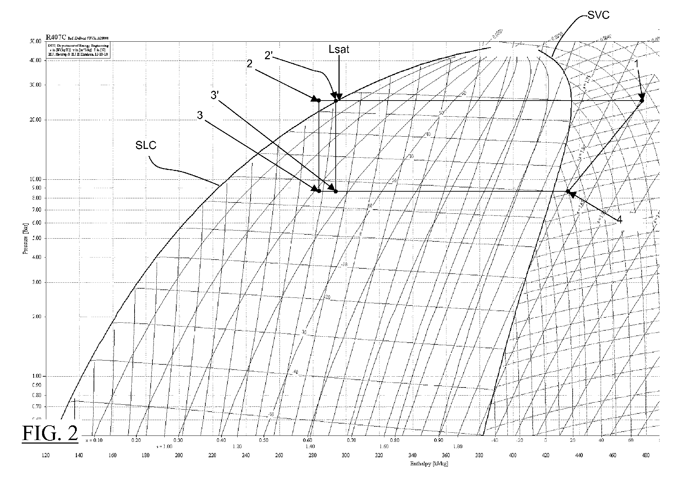

Referring to **Figure 2,** the diagram shows the pressure over enthalpy of a possible fluid that can be used as a refrigerant in the heat pump system, i.e. the fluid R407C (a known HydroFluoroCarbon - HFC - fluid). The saturated liquid curve **SLC** and the saturated vapor curve **SVC** distinguish three different zones (corresponding to three refrigerant statuses) that are typical for all refrigerants (indeed, the shape and the values of the curves are peculiar for each specific refrigerant fluid).

The points that belong to the saturated liquid curve **SLC** represent the saturated liquid condition: the refrigerant is all in liquid phase at the saturation temperature related to the actual pressure. The saturation temperature of the liquid state is also called "bubble point temperature" or, shortly, "bubble temperature".

The points that belong to the saturated vapor curve **SVC** represent the saturated vapor condition: the refrigerant is all in vapor phase at the saturation temperature related to the actual pressure. The saturation temperature of the vapor state is also called "dew point temperature" or, shortly, "dew temperature".

The zone at the left of the saturated liquid curve **SLC** is the sub-cooled liquid zone: the refrigerant is in liquid phase at a temperature lower than saturation temperature (at the actual pressure).

The zone between the saturated liquid curve **SLC** and the saturated vapor curve **SVC** is the two-phase zone: in this zone liquid phase and vapor phase coexist at the same time. The relative amount between liquid and vapor phases changes according to the position in the two-phase zone.

The zone at the right of the saturated vapor curve **SVC** is the superheated vapor zone: the refrigerant is in vapor phase at a temperature higher than saturation (at the actual pressure).

The saturated condition (liquid and vapor) can be seen as a limit condition for the maintenance of the complete liquid and vapor condition, respectively. A little movement in the diagram toward the right of the saturated liquid curve **SLC** and, respectively, the left of the saturated vapor curve **SVC** would bring the refrigerant into a two-phase status (liquid + vapor).

In **Figure 2,** two thermodynamic cycles of the refrigerant are depicted: a thermodynamic cycle with relatively pronounced sub-cooling (points 1 -> 2 -> 3 -> 4), and a thermodynamic cycle according to an embodiment of the present invention (points 1 -> 2' -> 3' -> 4). Looking at **Figure 2,** it can be seen that in the thermodynamic cycle according to an embodiment of the present invention essentially there is no sub-cooling, since point 2' is almost on the saturated liquid curve **SLC.**

The density of the refrigerant at high pressure and in liquid state is very high. Therefore, the amount of refrigerant that has to be charged in the heat pump system increases with the increase of the level of sub-cooling that takes place in the liquefier 7. A relatively low amount of refrigerant (low refrigerant charge) is advantageous for safety reasons, because it poses lesser problems when hydrocarbons refrigerants are used, which are flammable gases, and also under the environmental impact viewpoint.

In an embodiment of the present invention, the refrigerant charge amount of the heat pump system is minimized by ensuring that the refrigerant sub-cooling level at the inlet of the expansion device **14** is close to zero.

According to an embodiment of the present invention, in order to minimize the refrigerant charge amount, the heat pump elements (the first and second heat exchangers, the expansion device, the compressor) are designed and/or operated so that the thermodynamic quality *TQ* of the inlet of the expansion device **14** is kept between -0.03 ÷ 0.3, advantageously between -0.02 ÷ 0.1, preferably between -0.01 ÷ 0.1, more preferably between -0.005 ÷ 0.1, and even more preferably between -0.005 ÷ 0.05.

The thermodynamic quality *TQ* is a parameter defined as follows:

thermodynamic quality = $(h - h_{satL})/(h_{satV} - h_{satL})$
where:

- *h* is the actual refrigerant enthalpy;
- $h_{satL}$ is the enthalpy of the refrigerant in saturated liquid condition (it is the enthalpy of the point that is on the saturated liquid curve **SLC** and at the actual pressure of the refrigerant);

- $h_{satV}$ is the enthalpy of the refrigerant in saturated vapor condition (it is the enthalpy of the point that is on the saturated vapor curve **SVC** and at the actual pressure of the refrigerant).

The usefulness of defining the refrigerant fluid status by means of the thermodynamic quality parameter is explained herebelow.

In order to quantify the status of the refrigerant, two thermodynamic parameters can be introduced:

- the vapour quality, and
- the thermodynamic quality.

A refrigerant fluid can be in liquid state, in vapour state or in a status where the liquid and the vapor phase cohexist. The refrigerant status depends on the refrigerant pressure and temperature levels.

Referring to **Figure 2,** the "vapor quality" is defined as the ratio between the amount of refrigerant in the vapor phase and the total amount of refrigerant.

The vapor quality value is equal to 0 on the saturated liquid curve **SLC** (where all the refrigerant is in saturated liquid state); it is equal to 1 on the saturated vapor curve **SVC** (where all the refrigerant is in saturated vapor state) and it can assume values between 0 to 1 in the two-phase zone (between the saturated liquid curve **SLC** and the saturated vapor curve **SVC).**

According to the vapor quality definition, the whole sub-cooled liquid zone (i.e., the zone of the diagram at the left of the saturated liquid curve **SLC)** is characterized only and always by a vapor quality value equal to 0; thus, the vapor quality is a parameter that does not provide any information about the degree/level of sub-cooling of the refrigerant; in a similar manner, the vapor quality value in the superheated zone (i.e., the zone of the diagram at the right of the saturated vapor curve **SLC)** is only and always equal to 1.

Therefore, the vapor quality is a parameter that allows precisely identifying the refrigerant status only in the two-phase zone.

The thermodynamic quality and vapour quality values overlap in the two-phase zone; the thermodynamic quality takes values lower than 0 in the sub-cooled liquid zone and values higher than 1 in the superheated zone.

Therefore, by using the thermodynamic quality as a design/control parameter, it is possible to define the refrigerant status in the whole diagram, and in particular very close to the liquid saturation conditions.

A value of the thermodynamic quality close but lower than zero means that the refrigerant is completely in liquid state but very slightly sub-cooled - low sub-cooling level, much less than 1 °C, e.g. of the order of 0.1 °C - while a value of the thermodynamic quality close but higher than zero means that the refrigerant is not completely liquefied but there is still a small percentage of refrigerant in vapor state - e.g. of the order of 0.1 %).

Preferably, the expansion device **14** comprises a back-pressure expansion valve, controlled by the pressure and/or temperature of the refrigerant fluid exiting from the liquefier **7,** in order to make the sub-cooling level very low as described above.

The piping connecting the outlet of the refrigerant liquefier **7** to the inlet of the lamination means **14** is preferably kept as short as possible, preferably less than 5 cm in length.

Referring to **Figure 1,** in order to keep the thermodynamic quality within the above specified ranges , a fan **17** provided for cooling with ambient air the compressor **8** is properly operated by an appliance control unit **18.** Preferably, the speed of the fan **17** is controlled by the control unit **18** based on the detection of the refrigerant temperature and/or pressure in the high-pressure refrigerant circuit portion (that circuit portion going from the outlet of the compressor **8** to the inlet of the expansion device **14),** detected by a temperature or pressure sensor **19** at the outlet of the compressor **8,** and/or a temperature or pressure sensor **20** at the inlet of the expansion device **14.** In addition or in alternative to the control of the speed of the fan **17,** the control unit **18** can control the speed of the compressor **8.**

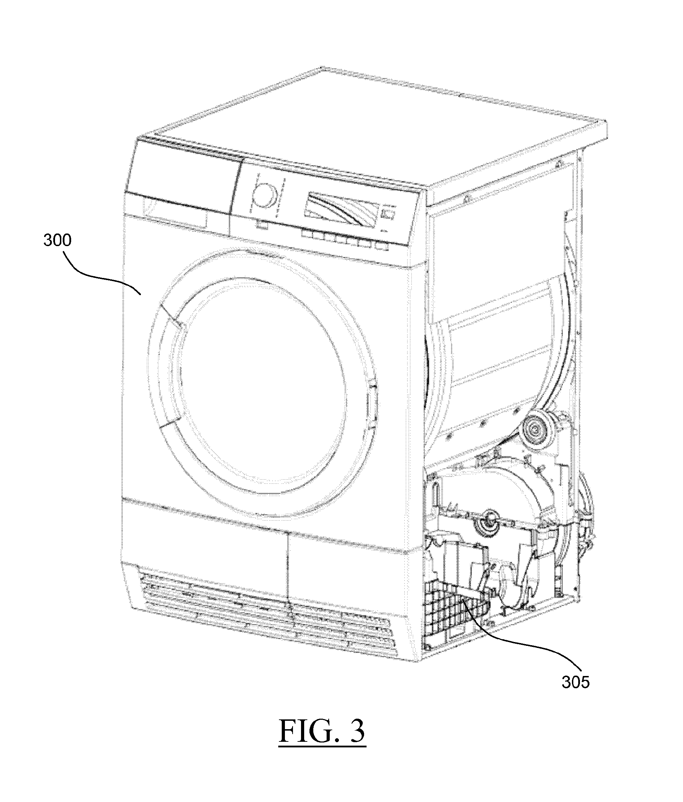

**Figure 3** is an isometric view of an exemplary laundry dryer. The laundry dryer comprises a cabinet **300,** having lateral walls (one of which has been removed in the drawing) and housing the drying drum **2** and the heat pump unit **5.**

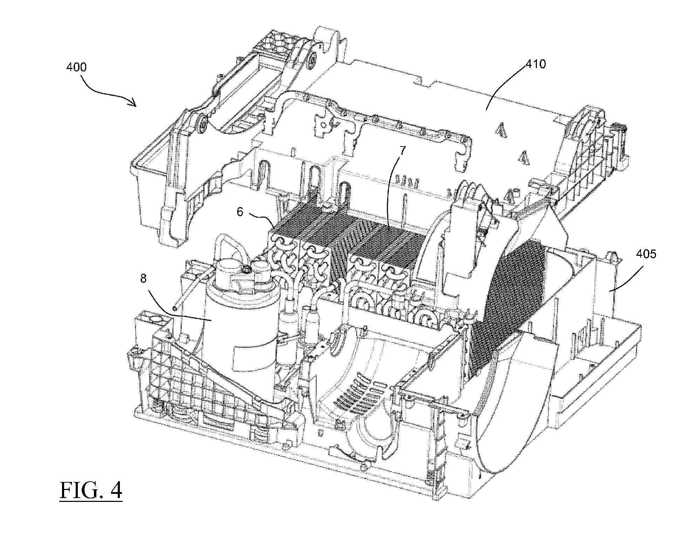

The heat pump unit **5** is for example housed in an appliance basement **305,** which is shown per se in **Figure 4.** The basement **305** is for example a shell composed of two half-shells **405** and **410** designed to match each other so that, when matched, they define inside them a space for accommodating the heat pump unit parts, like the evaporator **6,** the liquefier **7,** the compressor **8,** and passageways for the drying air.

**Claims**

1. Laundry or tableware treating appliance **(1),** having a heat pump system **(5),** the heat pump system having a refrigerant circuit, the appliance comprising:

   an articles treatment chamber **(2)** for treating articles using a medium;
   a first heat exchanger **(6)** for heating a refrigerant;
   a second heat exchanger **(7)** for cooling the refrigerant and heating the medium;
   a refrigerant expansion device **(14)** arranged in the refrigerant circuit between the second heat exchanger **(7)** and the first heat exchanger **(6),** and
   a compressor **(8)** arranged in the refrigerant circuit between the first heat exchanger **(6)** and the second heat exchanger **(7),**
   **characterized in that**

   the first and second heat exchanges and the refrigerant expansion device are designed so that, during a relevant part of the articles treating cycle the thermodynamic quality of the refrigerant at the inlet of the refrigerant expansion device is between -0.03 and 0.3, wherein the thermodynamic quality is defined as $(h - h_{satL})/(h_{satV} - h_{satL})$, with:

    $h$ being the actual refrigerant enthalpy;
    $h_{satL}$ being the enthalpy of the refrigerant in saturated liquid condition (it is the enthalpy of the point that is on the saturated liquid curve and at the actual pressure of the refrigerant);
    $h_{satV}$ being the enthalpy of the refrigerant in saturated vapor condition.

2. The appliance of claim 1, wherein the thermodynamic quality of the refrigerant at the inlet of the refrigerant expansion device is between -0.02 and 0.1.

3. The appliance of claim 2, wherein the thermodynamic quality of the refrigerant at the inlet of the refrigerant expansion device is between -0.01 and 0.1.

4. The appliance of claim 3, wherein the thermodynamic quality of the refrigerant at the inlet of the refrigerant expansion device is between -0.005 and 0.1.

5. The appliance of claim 4, wherein the thermodynamic quality of the refrigerant at the inlet of the refrigerant expansion device is between -0.005 and 0.05.

6. The appliance of any one of the preceding claims, wherein medium is washing water.

7. The appliance of any one of claims 1 to 5, wherein the appliance is a laundry dryer, the medium is drying air, the articles treating cycle is a drying cycle, and wherein the first exchanger also cools and dehydrates the drying air.

8. The appliance of claim 7, wherein said relevant part of the articles treating cycle is a percentage of the whole articles treating cycle.

9. The appliance of claim 8, wherein said percentage of the whole articles treating cycle is 100 %, or 70 %, or 50 %.

10. The appliance of claim 8 or 9, wherein said relevant part of the articles treating cycle is a steady-state phase of the drying cycle following an initial transitory phase during which the medium temperature and the refrigerant temperature are increased up to respective desired operating levels suitable to remove moisture from the laundry being dried.

11. The appliance of any one of the preceding claims, wherein the thermodynamic quality at the outlet of the second heat exchanger is substantially equal to the thermodynamic quality at the inlet of the refrigerant expansion device.

12. The appliance of any one of the preceding claims, wherein a piping connecting the outlet of the second heat exchanger to the inlet of the refrigerant expansion device is less than 5 cm in length.

13. The appliance of any one of the preceding claims, wherein the refrigerant expansion device comprises a back-pressure expansion valve, controlled by the pressure and/or temperature of the refrigerant fluid exiting from the second heat exchanger.

14. The appliance of any one of the preceding claims, comprising a fan (17) arranged for cooling with ambient air the compressor, and a control unit (18).

15. The appliance of claim 14, wherein the control unit is operable to control the speed of the fan and/or the compressor based on the detection (19,20) of the refrigerant temperature and/or pressure in a portion at high-pressure of the refrigerant circuit portion, in order to keep the thermodynamic quality within the specified range.

FIG. 1

FIG. 2

300

305

## FIG. 3

FIG. 4

Europäisches
Patentamt

European
Patent Office

Office européen
des brevets

# EUROPEAN SEARCH REPORT

Application Number

EP 12 19 8356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 527 520 A1 (ELECTROLUX HOME PROD CORP [BE]) 28 November 2012 (2012-11-28) * paragraph [0006] - paragraph [0066]; figures 1,2 * ----- | 1-15 | INV. A47L15/48 D06F58/20 A47L15/42 D06F39/04 |
| A | J.M. Choi, Y.C. Kim: "The effects of improper refrigerant charge on theperformance of a heat pump with an electronic expansionvalve and capillary tube", Energy, vol. 27, 4, April 2002 (2002-04), pages 391-404, XP002698392, Retrieved from the Internet: URL:http://ac.els-cdn.com/S036054420100093 7/1-s2.0-S0360544201000937-main.pdf?_tid=d ac13968-d297-11e2-8eb1-00000aacb35e&acdnat =1370956222_f89fae6436ba0ce671d1a3fab9ccda 93 * paragraph [03.3]; figures 10,11 * ----- | 1-5 | |
| X,D | US 2005/066538 A1 (GOLDBERG MICHAEL [US] ET AL) 31 March 2005 (2005-03-31) | 1-5,7-10 | TECHNICAL FIELDS SEARCHED (IPC) A47L D06F |
| A | * paragraph [0052] - paragraph [0095]; figure 1 * ----- | 11-15 | |

The present search report has been drawn up for all claims

| Place of search | Date of completion of the search | Examiner |
|---|---|---|
| Munich | 12 June 2013 | Engelhardt, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 19 8356

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2013

| Patent document cited in search report | Publication date | Patent family member(s) | Publication date |
|---|---|---|---|
| EP 2527520 A1 | 28-11-2012 | NONE | |
| US 2005066538 A1 | 31-03-2005 | AU 2004277943 A1 | 14-04-2005 |
| | | BR PI0414841 A | 21-11-2006 |
| | | CA 2540368 A1 | 14-04-2005 |
| | | EP 1667566 A2 | 14-06-2006 |
| | | JP 2007531552 A | 08-11-2007 |
| | | KR 20060083424 A | 20-07-2006 |
| | | US 2005066538 A1 | 31-03-2005 |
| | | US 2006179676 A1 | 17-08-2006 |
| | | WO 2005032322 A2 | 14-04-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050066538 A